# DEMANDE DE BREVET EUROPEEN

(11) **EP 1 669 671 A1**
(43) Date de publication de la demande: **14.06.2006**
(21) Numéro de dépôt: 05292314.1
(22) Date de dépôt: 02.11.2005
(51) Int. Cl.: F23N 1/00, F23N 5/10, F23N 5/24

(54) **Appareil de chauffage a convection avec alimentation electrique autonome du ventilateur**

(30) Priorité: 07.12.2004 FR 0412993
(71) Demandeur: Compagnie des Gaz de Pétrole Primagaz, Société Anonyme, 75017 Paris (FR)
(72) Inventeur: Bouvier, Daniel, 75011 Paris (FR)
(74) Mandataire: Eidelsberg, Olivier Nathan

(57) **Abrégé**

Cet appareil de chauffage comprend une source (4) de chaleur en relation d'échange thermique avec la face chaude d'un thermoélément (9), un groupe motoventilateur (12, 14) dont le moteur est alimenté par le thermoélément (9) et un échangeur de chaleur. Un circuit de fermeture d'une vanne d'alimentation de la source de chaleur (4) interrompt cette alimentation lorsque la température de l'échangeur de chaleur (10) dépasse une valeur donnée.

## Description

La présente invention se rapporte aux appareils de chauffage à brûleur et plus particulièrement aux appareils de chauffage à ventilateur de propulsion d'air chaud, qui sont autonomes en étant aptes non seulement à fournir la chaleur nécessaire au chauffage d'une pièce, mais aussi le courant électrique nécessaire au fonctionnement du ventilateur.

Au brevet des Etats-Unis d'Amérique n° 5 544 488, on décrit un ventilateur destiné à être associé à une source de chaleur quelconque. L'ensemble constitue ainsi un appareil de chauffage comprenant une source de chaleur en relation d'échange thermique avec la face chaude d'un thermoélément produisant du courant électrique lorsqu'une différence de température entre sa face chaude et l'une de ses faces, à maintenir froide, dépasse une valeur donnée. Le thermoélément alimente en courant électrique le moteur électrique d'un groupe motoventilateur. Un échangeur de chaleur ayant une entrée et une sortie pour de l'air mis en mouvement par le ventilateur est en relation d'échange thermique avec la face à maintenir froide du thermoélément.

Au brevet des Etats-Unis d'Amérique n°5 544 488, on rappelle qu'il existe un ventilateur ayant ce type d'agencement, mais dont le fonctionnement n'est pas stable. Il faut pour empêcher que la température de la face chaude du thermoélément ne s'élève trop et ne le détruise, écarter, à temps manuellement la source de chaleur. Le brevet se propose d'y remédier d'une part par un échangeur de chaleur en un matériau approprié et d'une dimension, masse et forme appropriées, et d'autre part, par deux dispositifs qui écartent le thermoélément de la source de chaleur lorsque la température menace de s'élever au-delà d'une limite supérieure L'un de ces moyens consiste à prévoir un déplacement mécanique à l'aide d'une vis entre la source de chaleur et le thermoélément. Ce moyen, bien loin d'améliorer ce qui était prévu auparavant, est pire. Non seulement il faut toujours une manoeuvre manuelle avec danger de se brûler, mais encore la manoeuvre manuelle est rendue plus lente et plus compliquée qu'auparavant et on ne sait pas de combien de tours de vis il convient d'écarter le thermoélément de la source de chaleur pour revenir à une température acceptable. Le deuxième moyen consiste à supporter le thermoélément d'un seul bloc avec le ventilateur. Lorsque la température du thermoélément s'élève, un bilame écarte automatiquement le thermoélément et le ventilateur qui fait corps avec lui de la source de chaleur, en le soulevant.

Cette solution séduisante en apparence rend ce ventilateur tout à fait inapte à être utilisé pour effectuer un chauffage soufflant d'une pièce. Comme le ventilateur doit être soulevé par un simple bilame, il doit être extrêmement léger et ne peut pas avoir un débit suffisant pour chauffer une pièce entière. Le dispositif décrit au brevet 5 544 488 est du domaine du gadget ; il ne peut pas constituer un appareil de chauffage efficace.

JP 56121941 décrit un appareil conforme au préambule de la revendication 1.

L'invention vise un appareil de chauffage dans lequel le thermoélément est protégé automatiquement vis-à-vis d'une trop grande élévation de la température tout en ayant un appareil donnant par un ventilateur de grande dimension un débit d'air pulsé suffisant pour chauffer la pièce et comparable aux ventiloconvecteurs électriques existants.

L'invention a donc pour objet un appareil de chauffage comprenant
- une source de chaleur en relation d'échange thermique avec la face chaude d'un thermoélément produisant du courant électrique lorsque une différence de température entre la face chaude et l'une de ses faces à maintenir froide, dépasse une valeur donnée,
- un groupe motoventilateur dont le moteur électrique est alimenté en courant électrique par le thermoélément,
- un échangeur de chaleur ayant une entrée et une sortie de l'air mis en mouvement par le ventilateur et en relation d'échange thermique avec la face, à maintenir froide, du thermoélément.

Suivant l'invention l'appareil comprend une sonde de la température de l'échangeur de chaleur ou du thermoélément et un circuit de fermeture d'une vanne d'alimentation de la source de chaleur lorsque la sonde relève une température supérieure à une température donnée. De préférence, la sonde relève la température de l'échangeur de chaleur qui est plus accessible, plus facile à repérer et plus stable que celle du thermoélément. Dès que la température relevée s'élève au-dessus d'une valeur donnée, ce qui laisse présager un dysfonctionnement faisant craindre que le thermélément ne soit définitivement endommagé, on ferme la vanne d'alimentation de la source de chaleur. De la chaleur n'est plus transmise au thermoélément. Au US-3005487, un thermocouple, qui d'ailleurs n'est pas une sonde de température, n'est pas, en tout cas, sensible à la température d'un échangeur de chaleur ou d'un thermoélément.

La source de chaleur peut être quelconque, mais, de préférence, c'est un brûleur.

Le brûleur peut être un brûleur à fluide, notamment à gaz ou à liquide, par exemple un brûleur à propane ou à butane, un brûleur à pétrole lampant, un brûleur au gaz naturel, un brûleur à essence. Ce peut être aussi un brûleur à catalyseur au lieu d'être un brûleur à flamme nue.

Le thermoélément est un module thermoélectrique, dit à effet Seebeck. Ce module thermoélectrique est constitué d'un réseau de couples semiconducteurs (pastilles PN) montées électriquement en série et thermiquement en parallèle pris en sandwich entre des substrats céramiques métallisés. On peut trouver des thermoéléments de ce type chez la Société Melcor, Frigicheaps, Etats-Unis d'Amérique et chez la Société Tellurex Corporation, Michigan, Etats-Unis d'Amérique.

De préférence, la sonde de température est un interrupteur thermique normalement fermé qui ouvre le circuit électrique sur lequel elle est montée lorsque la température relevée est supérieure à la température prescrite.

Suivant un mode de réalisation perfectionné, l'interrupteur thermique est monté en série avec un thermocouple placé dans la flamme d'un contrôleur d'atmosphère. Le même circuit électrique sert ainsi de sécurité tant vis-à-vis d'une atmosphère viciée que vis-à-vis d'un disfonctionnement pouvant provoquer la mise en danger du thermoélément.

Aux dessins annexés, donnés uniquement à titre d'exemple :
la figure 1 est un schéma d'un mode de réalisation d'un appareil de chauffage suivant l'invention, et
la figure 2 est un schéma d'une partie de ce mode de réalisation comportant les moyens de fermeture d'une vanne d'alimentation d'un brûleur à gaz butane.

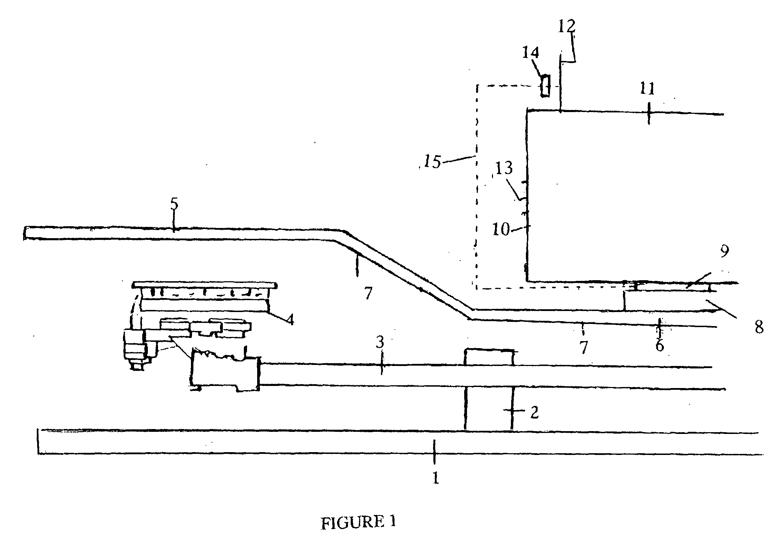

L'appareil de chauffage représenté à la figure 1 comprend un bâti 1 duquel part un plot 2 de pose d'un tuyau 3 de gaz alimentant un brûleur 4 à butane. Au-dessus du brûleur est placée une première partie 5 d'extrémité d'un élément de transmission. La partie 5 est reliée à l'autre partie 6 d'extrémité du brûleur par une partie 7 intermédiaire. La partie 5 est circulaire et a le même axe de révolution verticale que le brûleur 4. L'élément 5, 6, 7 est en aluminium A5 d'une pureté de 99 %. L'épaisseur de l'élément est de 6 mm. La partie 5 est à une distance du brûleur de 20 mm. Le diamètre de la partie 5 est de 180 mm. La largeur des parties 6 et 7 est de 120 mm. Le brûleur 4 a un éjecteur de 0,8 sous 28 millibar de butane donnant un débit de 190 g/h ce qui donne une puissance thermique de 2,6 kw environ (pouvoir calorifique supérieur).

En dehors de l'espace se trouvant au-dessus du brûleur 4, en se trouvant au-dessus de la partie 6 d'extrémité, est fixé par l'intermédiaire d'une plaque 8 en cuivre, un thermoélément 9. La face chaude inférieure du thermoélément 9 est en contact avec la plaque 8, tandis que sa face à maintenir froide supérieure est en contact avec un échangeur de chaleur 10. En régime stationnaire, la température de la face chaude du thermoélément pour une température ambiante de 20° C est comprise entre 180 et 185° C, la température pouvant s'élever jusqu'à une température de 200 à 210° C sans endommager le thermoélément. La température de la face froide est dans les mêmes conditions que ci-dessus de 50° C.

L'échangeur de chaleur est un échangeur à ailettes verticales d'une surface de 2 553 cm2, constitué d'un bloc semelle en aluminium de 152 x 152 de 12 mm d'épaisseur comportant 28 ailettes 10 en aluminium de 1,5 mm d'épaisseur de dimension 60 x 152 mm. Les ailettes sont collées dans des rainures à l'aide d'une colle conductrice de la chaleur.

La plaque 8 a une épaisseur de 10 mm et des dimensions de 42 x 120 mm, légèrement supérieures à celles du thermoélément 9.

Une entrée 11 d'air est ménagée à la partie supérieure de l'échangeur de chaleur 10. Un ventilateur 12 refoule de l'air ambiant dans l'échangeur de chaleur 10 par l'entrée 11, cet air après s'être réchauffé sur la face chaude du thermoélément sortant par une sortie 13 circulaire d'axe horizontal se trouvant au-dessus du plan de la partie 5.

Le ventilateur 12 fait partie d'un groupe motoventilateur dont le moteur 14 est alimenté en électricité par une ligne 15 reliant le thermoélément 9 au moteur 14.

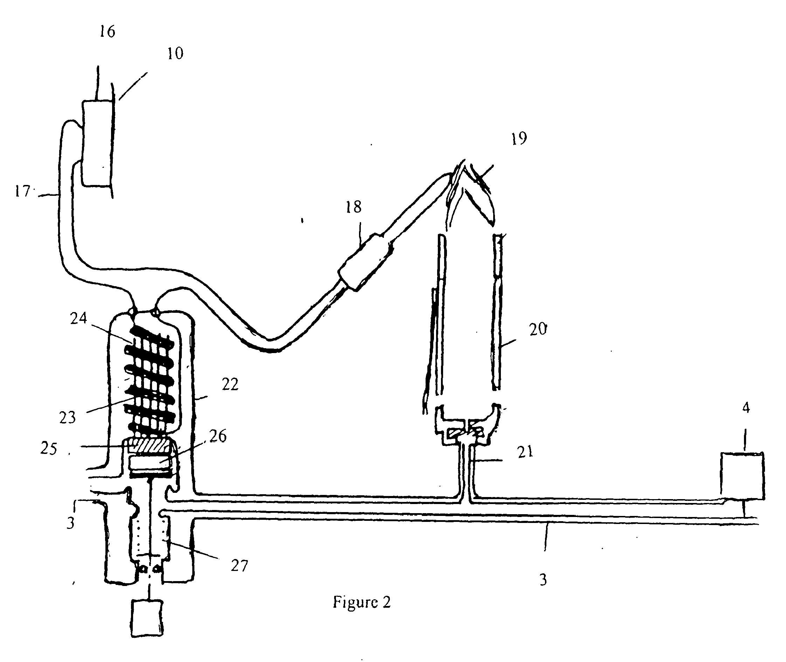

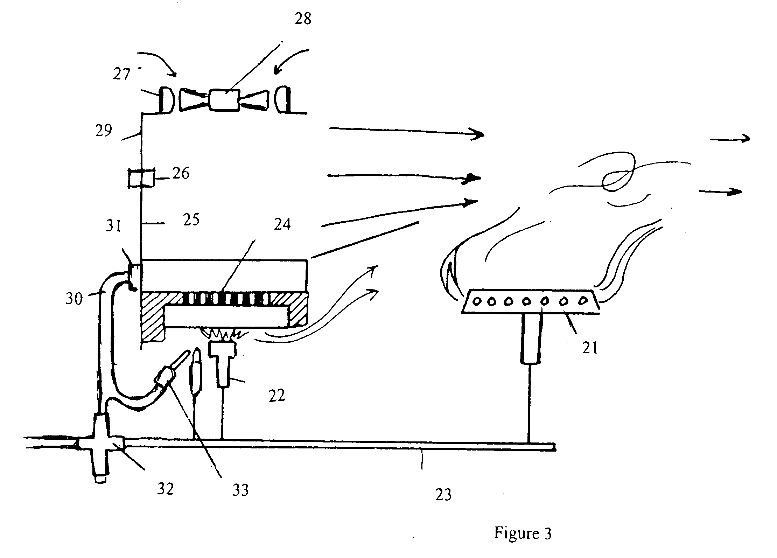

Sur l'échangeur de chaleur 10 est posé (figure 2) un interrupteur thermique 16 normalement fermé, monté dans un circuit électrique 17 en série avec un thermocouple 18. Le thermocouple 18 coopère avec la flamme 19 d'un contrôleur 20 d'atmosphère alimenté par un conduit 21 en gaz butane à partir de la conduite 3. En amont de la conduite 3 par rapport au conduit 21 est montée une vanne 22 d'alimentation en gaz butane. Cette électrovanne 22 est alimentée en courant par le circuit 17 et comprend un noyau 23 magnétique entouré d'un enroulement 24, une pièce polaire 25 et un clapet 26 repoussé vers le haut par un ressort 27 de rappel mais abaissé et venant fermer le conduit 3 lorsque du courant cesse de passer dans le circuit 17 et lorsque ainsi la pièce polaire 25 solidaire du noyau 23 n'est plus attirée vers le haut.

L'ouverture de l'interrupteur 16 entraîne aussi la fermeture du conduit 3.

## Revendications

1. Appareil de chauffage comprenant
- une source (4) de chaleur en relation d'échange thermique avec la face chaude d'un thermoélément (9) produisant du courant électrique lorsqu'une différence de température entre sa face chaude et l'une de ses faces à maintenir froide, dépasse une valeur donnée,
- un groupe motoventilateur dont le moteur (14) électrique est alimenté en courant électrique par le thermoélément (9),
- un échangeur de chaleur (10) ayant une entrée (11) et une sortie (13) pour de l'air mis en mouvement par le ventilateur (12) et en relation d'échange thermique avec la face, à maintenir froide, du thermoélément (9),
**caractérisé en ce qu'**il comprend une sonde (16) de la température de l'échangeur de chaleur (10) ou du thermoélément et un circuit (17) de fermeture d'une vanne (22) d'alimentation de la source (4) de chaleur lorsque la sonde (16) relève une température supérieure à une température prescrite.

2. Appareil suivant la revendication 1, **caractérisé en ce que** la température relevée est celle de l'échangeur de chaleur.

3. Appareil suivant la revendication 1 ou 2, **caractérisé en ce que** la source de chaleur est un brûleur.

4. Appareil suivant l'une des revendications précédentes, **caractérisé en ce que** la sonde est un interrupteur thermique (16) normalement fermé qui ouvre le circuit (17) électrique sur lequel elle est montée lorsque la température relevée est supérieure à la température prescrite.

5. Appareil suivant la revendication 4, **caractérisé en ce que** l'interrupteur thermique (16) est monté en série avec un thermocouple (18) placé dans la flamme d'un contrôleur (20) d'atmosphère.
